# EUROPEAN PATENT APPLICATION

(11) **EP 1 443 790 A1**
(43) Date of publication of application: **04.08.2004**
(21) Application number: 03396107.9
(22) Date of filing: 25.11.2003
(51) Int. Cl.: H04Q 7/38

(54) **Method and system for sharing the capacity in a radio access network**

(30) Priority: 31.01.2003 US 355064
(71) Applicant: Nokia Corporation, 00045 Espoo (FI)
(72) Inventor: Schwarch, Uwe, 02880 Veikkola (FI); Johansson, Klas, 17237 Sundbyberg (SE); Kristensson, Martin, 00260 Helsinki (FI)
(74) Representative: Simmelvuo, Markku Kalevi

(57) **Abstract**

The objective of the present invention is to provide a means for network sharing in the multioperator mobile networks. Furthermore, the object of the present invention is to cover different sharing constellations. Despite the high amount of different sharing alternatives of the present invention, they are not contradicting each other but are only options for different sharing needs.

## Description

### FIELD OF THE INVENTION

The present invention relates to the telecommunication systems. In particular, the present invention relates to a novel and improved method and system for sharing the capacity of a mobile communications network in a cellular radio access network.

### BACKGROUND OF THE INVENTION

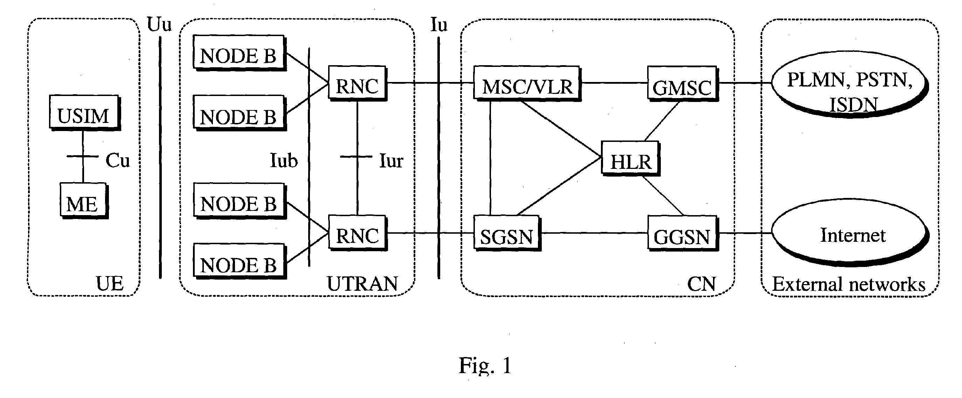

In the current specifications of the third generation mobile networks (referred to as UMTS), the system utilises the same well-known architecture that has been used by all main second-generation systems. A block diagram of the system architecture of the current UMTS network is presented in figure 1. The UMTS network architecture includes the core network (CN), the UMTS terrestrial radio access network (UTRAN), and the user equipment (UE). The core network is further connected to the external networks, i.e. Internet, PLMN, PSTN and/or ISDN.

The GSM Phase 1/2 Core Network consists of network switching subsystem (NSS). The NSS further consists of the following functional units: Mobile Switching Center (MSC), Visitor Location Register (VLR), Home Location Register (HLR), Authentication Center (AC) and equipment identity register (EIR). The GSM Phase 2+ enhancements to the GSM phase 1/2 CN are serving GPRS (General Packet Radio Service) support node (SGSN), gateway GPRS support node (GGSN) and CAMEL service environment. The most important new feature that is introduced with GPRS is packet switching (PS). For UMTS, only minor modifications to the GSM Phase 2+ core network are needed. For instance, allocation of the transcoder (TC) function for speech compression.

UTRAN architecture consists of several radio network subsystems (RNS). The RNS is further divided into the radio network controller (RNC) and several base stations (BTS, referred to as B nodes in the 3GPP specifications).

In this architecture there are several different connections between the network elements. The Iu interface connects CN to UTRAN. The Iur interface enables the exchange of signalling information between two RNCs. The signalling protocol across the Iur interface is called radio network subsystem application part (RNSAP). The RNSAP is terminated at both ends of the Iur interface by an RNC. The Iub interface connects an RNC and a node B. The Iub interface allows the RNC and node B to negotiate about radio resources, for example, to add and delete cells controlled by node B to support communication of dedicated connection between UE and S-RNC, information used to control the broadcast and paging channels, and information to be transported on the broadcast and paging channels. One node B can serve one or multiple cells. UE is connected to node B through the Uu radio interface. UE further consists of a subscriber identity module (USIM) and mobile equipment (ME). They are connected by the Cu interface. Connections to external networks are made through Gateway MSC (towards circuit switched networks) or GGSN (towards packet switched networks).

Radio Resource Management (RRM) e.g. in the GERAN (GSM/EDGE Radio Access Network; GSM, Global System for Mobile Communications; EDGE, Enhanced Data rates for GSM Evolution) and the UTRAN (UMTS Terrestrial Radio Access Network) is responsible for utilisation of air interface resources. The RRM is needed for e.g. maintaining the QoS (Quality of Service), planned coverage, and for offering high capacity. The RRM enables optimising service capacity and capability. The full scope of the RRM is large, and it can be divided into handover, power control, admission control, load control and packet scheduling functionalities.

Also, in coming multisystem, multilayer, or multioperator networks it is essential to utilise all the systems or layers in the most efficient way. For this reason, a new network element, the Common Radio Resource Management (CRRM), is being developed. The main functionality of the CRRM is to be able to direct the connections in the call set-ups and handovers to the optimum cell within optimum radio access technology (RAT) depending on the Quality of Service (QoS) requirements of the connection. The algorithms of the CRRM for the target cell selection and auto-tuning are based on the input parameters read from the respective interfaces. These parameters represent the status information of the different cells. Parameters can be, for example, the total load, RTLoad (RT, Real Time), SIR (Signal to Interference Ratio) and NRT Delay (NRT, Non Real-Time). Another example in which common measurements have to be reported is the Iur-interface between different Radio Network Controllers (RNC).

Network sharing between operators has yet been used for the initial phase of deployment of WCDMA networks. In today's roaming based network sharing solutions, the possibilities for service differentiation between the operators are restricted. The control of the used capacity is restricted only to charging afterwards in the core network. Thus, the problem at the moment is that there is no way to dedicate resources in the shared network for a specific operator, neither is it possible to prioritise users depending on their home network operator.

In this application we are considering mobile communication networks shared by two or more operators. Sharing can be carried out by two different ways. Each operator sharing the network owns or is entitled to use its own air interface carrier or operators share the same air interface carrier, e.g. in national roaming. Sharing can also mean a combination of the two above-mentioned solutions.

Network sharing is an effective way to save costs of infrastructure and will certainly be used in future in the rollout phase of UMTS networks. In the initial phase, the sharing can be based on the simple assumptions, i.e. congestion is not an issue due to huge amount of new capacity, the main goal is to build coverage, but also to meet the regulator requirements, and differentiation between operators is not important. However, this kind of sharing will sooner or later discontinue as the need of the capacity increases and the operators are more willing to compete e.g. by service differentiation.

Nevertheless, network sharing is still highly beneficial in later deployment as in some geographical areas the population density is too low to reach economical use of separate networks, the role of virtual operators (as well as pure service providers) provides new business cases and opportunities, and network sharing on a national roaming basis allows additional capacity usage (statistical multiplexing gain).

To allow sharing in a controlled and pre-defined way - according to sharing agreements - operator specific Radio Resource Management (RRM) is needed. This would enable fair sharing of available capacity as well as service differentiation between the sharing operators.

Moreover, network sharing in the long term will be difficult if there is not enough individual control of the RRM. In order to build longstanding and fruitful co-operation relationships and sharing agreements between the operators, more control over the resources is needed. This requires that each operator have to be able to control the resources dedicated to it.

Furthermore, because the capacity has not been so important in the rollout phase of shared networks, the sharing problem has been solved with over-dimensioning and mutual trust. However, there is no way to monitor the resource usage in specific cells for each operator, which makes it difficult to divide investments costs between the operators. The purpose of this invention is to provide means for network sharing in the multioperator mobile networks. Furthermore, the object of the present invention is to cover different sharing constellations. Despite the high amount of different sharing alternatives of the present invention, they are not contradicting each other but are only options for different sharing needs. Also the purpose of the present invention is to provide a fair and easy solution to monitor the usage of the shared network.

### SUMMARY OF THE INVENTION

Consequently, the present invention concerns a novel and improved method and system for implementing operator specific radio resource management primarily in WCDMA networks shared as described above. Though mainly targeted for WCDMA with a high capacity to share per carrier, the invention is obviously also applicable to other cellular network standards. The invention allows fully controlled sharing, which can mean, for example, fair sharing in the sense of guaranteeing each operator an agreed capacity share. It can also mean the prioritization of operator's own subscribers over roaming subscribers, depending on the roaming agreements.

As is known roaming is one of many types of network sharing. Sometimes, subscribers are equally treated, e.g. with MVNO - mobile virtual network operator, sometimes there is a home and guest type of subscriber, e.g. one operators owns the network and another rents resources, or then the subscribers are treated as roaming ones. In this context the "roaming subscriber" can be interpreted more general by the "guest subscriber" or the like.

The inventive method and system for sharing the network resources in the group of network operators, said group including at least two operators in a distributed radio access network is based on the following main operational functions. These are accomplished, in one embodiment, in connection with a sharing decision whenever the subscriber is establishing a new connection or is roaming to the coverage area of other operator.

At first the serving operator is identified on the basis of the identity of a subscriber that is demanding the resource, i.e. a new connection, or is roaming. Secondly the available resources are checked for said operator, and possibly the type (home or roaming subscriber) of said subscriber. Lastly, the use of the available resources in the network is controlled on the basis of said checking and the predefined group of the sharing rules.

The sharing rules can be composed from the radio resource management functionalities in distributed radio access network, and the type of subscriber in question. Said functionalities can include, among others, load control functionality, admission control functionality, packet scheduling functionality, and handover functionality, and hardware resources. Moreover, the serving operator is identified on the basis of at least one of the following identifiers of the subscriber's connection: International Mobile Subscriber Identity (IMSI), Temporary Mobile Subscriber Identity (TMSI), SRNC (Serving RNC) Radio Network Temporary identity (S-RNTI), Radio Network Temporary identity (RNTI), GRNC (Group RNC) Radio Network Temporary identity (G-RNTI), Terminal Facility Identifier (TFI), DRNC (Drift RNC) Radio Network Temporary identity (D-RNTI), Terminal context ID and shared network area (SNA) access rights. These identifiers are commonly used in the distributed radio access network, i.e. IP RAN (IP Radio Access Network).

Thanks to the present invention the dedicated capacity can be guaranteed for each operator sharing the same frequency or carrier. This makes the shared networks a more beneficial solution when capacity enhancements are needed and built. Moreover in geographical areas where the population density is too low the invention enables the economical use of a common network for sharing operators. Also the present invention makes it possible to establish virtual operators (as well as pure service providers) into en existing network.

Moreover thanks to the invention it is possible to dedicate the network capacity per operator when multiple operators share the same frequency making the shared networks a more credible solution when capacity enhancements are needed. Also the present invention could be used for accounting purposes, e.g. in order to determine how much each operator has used the resources in specific parts of a shared network.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig 1** is a block diagram illustrating an example of the state of the art scenario relating to the present mobile network;
**Fig 2** is a flow diagram illustrating an example of the resource management in a distributed radio access network according to the present invention;
**Fig 3** is a flow diagram illustrating an example of the resource management in a distributed radio access network according to the present invention;
**Fig 4** is a flow diagram illustrating an example of the resource management in a distributed radio access network according to the present invention;
**Fig 5** is a flow diagram illustrating an example of the resource management in a distributed radio access network according to the present invention;
**Fig 6** is a block diagram illustrating a sharing example according to one example of the present invention.

### DETAILED DESCRIPTION OF THE INVENTION

Reference will now be made in detail to the embodiments of the present invention, examples of which are illustrated in the accompanying drawings.

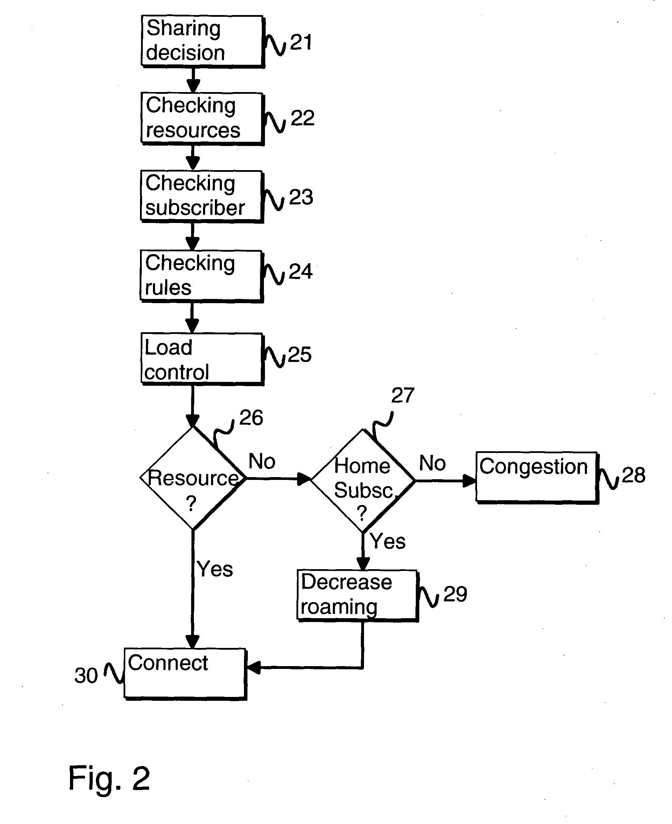

In figures 2 - 5 different embodiments for sharing and management decisions for sharing the resources between subscribers of different operators are presented. We point out that these are only examples of ways to implement the present invention, and they can be used individually or as a combination. These examples are not meant to be restrictive.

In figure 2 process starts, block 21, with a situation in which the subscriber is establishing or demanding a communication channel or resource for packet switched (PS) or circuit switched (CS) or both communication. In the first step the available resources are checked, block 22. The real situation regarding the resources has to be analysed on the operator basis. Thus the type of the subscriber has to be checked, block 23. The type of the subscriber here means whether the subscriber is the home subscriber or the roaming subscriber of the network. After these two conditions are known, the sharing rules are found out, block 24. In this example, the sharing rule is based on the load control (LC) functionality of radio resource management (RRM) functions, block 25. Load control (LC) means operator specific overload control i.e. if the cell is congested or the resources are limited, block 26, the call is dropped, block 28, or the bit rate of roaming users is decreased, block 29 before the bit rate of the home subscribers is affected. This rule can also enable guaranteed capacities for roaming subscribers (fair sharing) depending, however, on sharing agreements between operators. This requires estimation of operators load shares and is not an issue in this application.

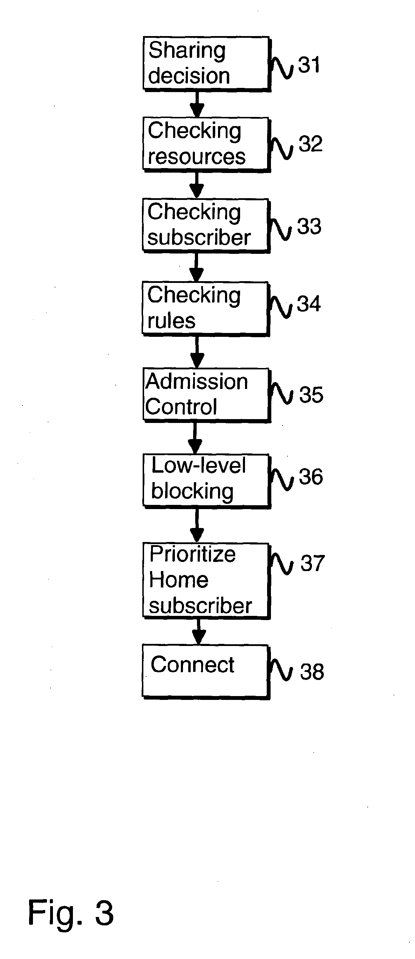

In figure 3 is described another preferred embodiment of the present invention. In this example, the steps 31 - 34 are identical to steps 21 - 24 in figure 2 and are not described in the context of figure 3.

After all the preliminary checks and decisions have been made, the procedure in figure 3 continues in the following way. The chosen or designated sharing rule in this example is based on the admission control (AC) functionality of the radio resource management functionalities. In admission control (AC) the roaming subscribers can be blocked (or admitted with lower bit rates) already at lower load, block 36, i.e. before the home subscribers to not compromise on own call blocking when sharing. This leads to a prioritisation of the home subscribers, block 37. In this context is enabled guaranteed capacities for roaming subscribers (fair sharing) by blocking those operator's subscribers that has already filled up its allowed capacity.

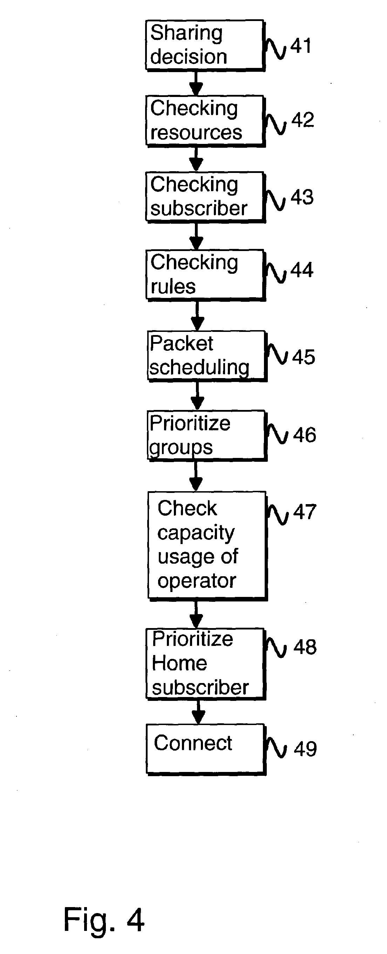

In figure 4 is described another preferred embodiment of the present invention. In this example, the steps 41 - 44 are identical to steps 21 - 24 in figure 2 and are not described in the context of figure 4.

After all the preliminary checks and decisions have been made, the procedure in figure 4 continues in the following way. The chosen or designated sharing rule in this example is based on the packet scheduling (PS) functionality of the radio resource management functionalities. In this scheme is assigned different priorities to each subscriber group, block 46. Prioritising can be done on the following basis. Own subscribers are prioritised higher than roaming subscribers, block 48 and the priorities are adjusted based on current capacity usage for each operator, block 47. In this solution can be implemented also 'capacity ratios' for packet switched traffic, e.g. by scheduling N times more packets for one of the operators than for the other. Moreover operator specific QoS policies can be enabled with the packet scheduling functionality.

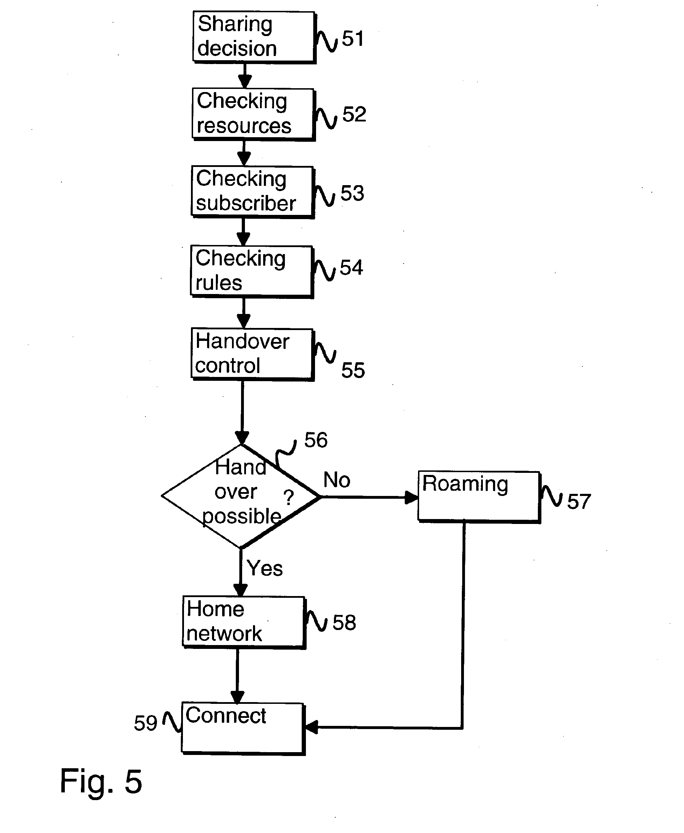

In figure 5 is described another preferred embodiment of the present invention. In this example, the steps 51 - 54 are identical to steps 21 - 24 in figure 2 and are not described in the context of figure 5.

After all the preliminary checks and decisions have been made, the procedure in figure 4 continues in the following way. The chosen or designated sharing rule in this example is based on the handover control (HC), block 55, functionality of the radio resource management functionalities. Handover control (HC) means operator specific service control by service reason handover or specific coverage handover triggers to allow roaming subscribers to return to their home network as soon as possible, blocks 56, 57.

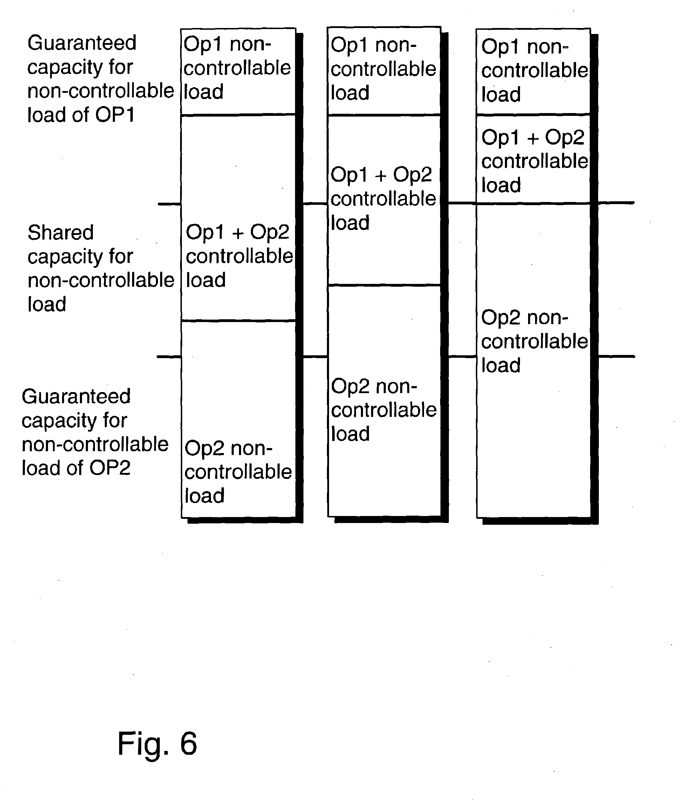

In figure 6 is presented a preferred example of network sharing based on the control of RT (real time) (controllable load) load and NRT (non real time) (non-controllable load) load. Operator 1 Op1 and operator 2 Op2 agree on guaranteed capacity for non-controllable load. The rest is treated as shared capacity that can be used by non-controllable or controllable load. Each operator's non-controllable load can fill up its own guaranteed capacity plus the shared capacity. The controllable load can even fill up the other operators guaranteed capacity provided the other operator doesn't use it at the moment.

In addition to the pre-defined capacity above, the handling of the controllable load (non-real time packet switched) can be set that way that users of operator 2 Op2 are prioritised the more the less they use the common capacity. The operator specific (e.g. IMSI based) prioritisation can be done in the packet scheduler (PS). This way, capacity is used very efficiently while operators still have guaranteed own capacities.

If in the above example there were an operator that would like to use its own GSM network in addition to e.g. WCDMA network to balance the users between its two technologies and the other operator (of the example above) wanted to keep its subscribers as long as possible in its own UMTS network before handing them over via national roaming to another network, the system would needed operator specific triggers for handovers. Handovers are part of RRM-HC. Radio resource management is located in the network controller (BSC in GSM/cdma2000, RNC in WCDMA). The implementation of this invention is therefore in the RNC and BSC (fig 1). In IP-RAN part of the RRM functionality will be located in the IP-base station. Admission control for example is in charge of letting in (or blocking) new mobiles.

Moreover, in the above example the load per operator in a shared network could be measured per cell. The load is calculated as a sum for all users belonging to the same operator as identified in preceding steps. In the measurements one could use operator specific throughput in MAC-d (Medium Access Control, MAC-d is a protocol layer), or allocated bit rates in RRM. It is to be noted that there can be other parameters to use in the measurements and these two are only examples. The load control, determining the maximum cell capacity, is based on total received and transmitted power in the base station. Throughput or bit rate measurements are thus not 100% correct because the required Eb/N0 depends also on a number of other things, e.g. the mobile-to-base station distance. However, the suggested measurements are considered to be both feasible and accurate enough when taking statistical averaging into account. Operator specific power measurement is not feasible in uplink, so it does not fulfill the requirements for this invention.

To sum up, the main idea of the invention is to make radio resource management (RRM) operator specific in the mobile networks shared as described above. This allows the implementation of a fully controlled sharing. The fully controlled sharing can for example mean fair sharing in the sense of guaranteeing each operator the agreed capacity. It can also mean to always prioritise, for example by lowering the blocking probability or increasing the bit rates, of own subscribers over roaming subscribers - depending on the roaming agreements. Which operator a subscriber belongs to can be identified by the International Mobile Subscriber Identity (IMSI), or some other identifier.

It is obvious to a person skilled in the art that with the advancement of technology, the basic idea of the invention may be implemented in various ways. The invention and its embodiments are thus not limited to the examples described above or to WCDMA; instead they may vary within the scope of the claims.

## Claims

1. A method for sharing the network resources in the group of network operators, said group including at least two operators, in a cellular radio access network, wherein in connection with a sharing decision:
identifying the operator that serves the subscriber demanding the resource;
checking the available resources for said serving operator; and
controlling the use of the available resources in the network based on a set of sharing rules.

2. The method according to claim 1, wherein in the controlling phase selecting one or more of the sharing rules for the basis of a controlling decision.

3. The method according to claim 1, wherein the predefined group of the sharing rules is composed on the basis the radio resource management functionalities, and the identity of subscriber in question.

4. The method according to claim 1, wherein for specific user groups, the serving operator is chosen based on the current status of the sharing rules.

5. The method according to claim 3, wherein one of the sharing rules is based on a load control functionality of the radio resource management to control the operator specific overload, wherein
if the resource is congested, the use of the resources is decreased from roaming subscribers to release the resource for the home subscriber.

6. The method according to claim 3, wherein one of the sharing rules is based on an admission control functionality of the radio resource management.

7. The method according to claim 6, wherein blocking roaming subscribers already at lower load in order to reserve resources for home subscribers.

8. The method according to claim 7, wherein prioritising the radio access bearer (RAB) requests in RAB queue.

9. The method according to claim 8, wherein the blocking of roaming subscribers is prioritised on the basis of the used capacity per operator.

10. The method according to claim 3, wherein in a packet scheduling functionality of the radio resource management assigning different priorities to a specific group of the subscribers.

11. The method according to claim 10, wherein the group of the home subscribers is always prioritised higher than the group of the roaming subscribers.

12. The method according to claim 9, wherein adjusting the priorities is based on the current capacity usage of the operators.

13. The method according to claim 10, wherein implementing the capacity ratios for the usage of the packet switched traffic for different operators.

14. The method according to claim 10, wherein enabling operator specific quality of service (QoS) levels.

15. The method according to claim 3, wherein one of the sharing rules is based on an operator specific service control by service reason handover.

16. The method according to claim 3, wherein one of the sharing rules is based on a specific coverage handover triggers to allow the roaming subscriber to handover to its home network as soon as possible.

17. The method according to claim 1, wherein the serving operator is identified on the basis of at least one of the following identifiers of the subscriber's connection: International Mobile Subscriber Identity (IMSI), Temporary Mobile Subscriber Identity (TMSI), S-RNTI, RNTI, G-RNTI, TFI, D-RNTI, Terminal context ID, and Shared Network Area (SNA) access rights.

18. The method according to claim 1, wherein measuring the load per operator in a shared network.

19. The method according to claim 18, wherein the load is measured per cell and the load is calculated as the sum for all users belonging to the same operator as identified

20. The method according to claim 1, wherein using operator specific throughput in MAC-d, or allocated bit rates in RRM.

21. A system for sharing the network resources in the group of network operators, said group including at least two operators in a network, wherein in said system comprises:
identifying means for identifying the operator on the basis of the identity of a subscriber demanding the resource;
checking means for checking the available resources for said operator; and
controlling means for controlling the use of the available resources in the network based on the predefined group of the sharing rules.

22. The system according to claim 21, wherein said controlling means include selecting means for selecting one or more of the sharing rules for the basis of a controlling decision.

23. The system according to claim 21, wherein one of the sharing rules is based on a load control functionality of the radio resource management to control the operator specific overload, wherein
if the resource is congested, the use of the resources is decreased from roaming subscribers to release the resource for the home subscriber.

24. The system according to claim 21, wherein one of the sharing rules is based on an admission control functionality of the radio resource management.

25. The system according to claim 24, wherein blocking roaming subscribers already at lower load in order to reserve resources for home subscribers.

26. The system according to claim 24, wherein prioritising the radio access bearer (RAB) requests in RAB queue.

27. The system according to claim 24, wherein the blocking of roaming subscribers is prioritised on the basis of the used capacity per operator.

28. The system according to claim 23, wherein in a packet scheduling functionality of the radio resource management assigning different priorities to a specific group of the subscribers.

29. The system according to claim 24, wherein the group of the home subscribers is always prioritised higher than the group of the roaming subscribers.

30. The system according to claim 24, wherein adjusting the priorities is based on the current capacity usage of the operators.

31. The method according to claim 24, wherein implementing the capacity ratios for the usage of the packet switched traffic for different operators.

32. The system according to claim 24, wherein enabling operator specific quality of service (QoS) levels.

33. The system according to claim 24, wherein one of the sharing rules is based on an operator specific service control by service reason handover.

34. The system according to claim 24, wherein one of the sharing rules is based on a specific coverage handover triggers to allow the roaming subscriber to handover to its home network as soon as possible.

35. The system according to claim 21, wherein serving operator is identified on the basis of at least one of the following identifiers of the subscriber's connection: International Mobile Subscriber Identity (IMSI), Temporary Mobile Subscriber Identity (TMSI), SRNC (Serving RNC) Radio Network Temporary identity (S-RNTI), Radio Network Temporary identity (RNTI), GRNC (Group RNC) Radio Network Temporary identity (G-RNTI), Terminal Facility Identifier (TFI), DRNC (Drift RNC) Radio Network Temporary identity (D-RNTI), Terminal context ID and shared network area (SNA) access rights.

36. The system according to claim 21, wherein measuring the load per operator in a shared network.

37. The method according to claim 21, wherein the load is measured per cell and the load is calculated as the sum for all users belonging to the same operator as identified

38. The method according to claim 21, wherein using operator specific throughput in MAC-d, or allocated bit rates in RRM.
